# EUROPEAN PATENT SPECIFICATION

(11) **EP 2 261 773 B1**
(45) Date of publication and mention of the grant of the patent: **21.09.2011**
(21) Application number: 09162321.5
(22) Date of filing: 09.06.2009
(51) Int. Cl.: G06F 3/033, H01H 25/04

(54) **Directional clickable trackball**
Direktional anklickbarer Trackball
Boule de commande cliquable directionnellement

(43) Date of publication of application: 15.12.2010
(73) Proprietor: RESEARCH IN MOTION LIMITED, Waterloo, Ontario N2L 3W8 (CA)
(72) Inventor: Fyke, Steven H., Waterloo Ontario N2L 3W8 (CA); Hanson, Daniel J., Waterloo Ontario N2L 3W8 (CA)
(74) Representative: Roberts, Gwilym Vaughan

(56) References cited:
- EP-A2- 0 123 184
- US-A- 4 031 345
- US-A- 4 536 625
- US-A1- 2002 000 971

## Description

### FIELD OF TECHNOLOGY

The present disclosure, in a broad sense, is directed towards navigation devices. More specifically, the disclosure relates to providing a multi-function navigation device that can be rotated and also directionally depressed in one of at least two predetermined directions.

### BACKGROUND

Electronic devices that can be configured for user input rely upon various mechanisms to input commands or other instructions to the device. For instance, computers, typewriters and word processors have relied upon keyboards to allow users to input data into those electronic devices. Additionally, graphical user interfaces allow users to navigate among displayed items on electronic devices. While in some instances navigation can be instructed using a keyboard, a specialized navigation input device can be provided for or accommodated within the configuration of the electronic device. For instance, a mouse is often associated with a computer that allows the user to instruct motion of a cursor or caret on the display.

Navigation input devices can be complemented by the presence of one or more associated buttons for inputting of commands to the device. For example, a right button and a left button can be provided on a mouse and can perform commands upon being depressed by a user. In another example, arrow buttons can indicate commands to go up, down, left and right. These devices can suffer from various limitations, e.g., navigational precision or excessive spacial footprint on a device. Additionally, these navigation input devices can be incorporated into small handheld electronic devices in which such limitations become further exacerbated.

US 4,031,345 discloses a miniature electrical switch mechanism.

EP0123184 discloses a keyboard design relating to keyboard keys.

US2002/0000971 discloses an image controller such as a track ball.

### BRIEF DESCRIPTION OF THE DRAWINGS

Exemplary arrangements conducted and configured according to the advantageous solutions presented herein are depicted in the accompanying drawings where in:

FIG. 1 is a cross-sectional view of an electronic device having an integrated multi-function navigation device in accordance with an exemplary embodiment;

FIG. 2A is a cross-sectional view of a home position of a spherical member of a multi-function navigation device in accordance with an exemplary embodiment;

FIG. 2B is a cross-sectional view of a depressed position of the spherical member of a multi-function navigation device in accordance with an exemplary embodiment;

FIG. 3A is a perspective view of a two-way directional positioning mechanism with ramped sides in accordance with an exemplary embodiment;

FIG. 3B is a perspective view of a two-way directional positioning mechanism with further curved ramped sides in accordance with an exemplary embodiment;

FIG. 3C is a perspective view of a two-way directional positioning mechanism in the form of a roller in accordance with an exemplary embodiment;

FIG. 3D is a perspective view of a four-way directional positioning mechanism with curved ramped sides in accordance with an exemplary embodiment;

FIG. 3E is another perspective view of a four-way directional positioning mechanism with curved ramped sides in accordance with an exemplary embodiment;

FIG. 3F is a perspective view of a four-way directional positioning mechanism in the form of four associated rollers in accordance with an exemplary embodiment;

FIG. 4 is a perspective view of a multi-function navigation device incorporated into a typical stand alone mouse-like pointing device in accordance with an exemplary embodiment;

FIG. 5 is a perspective view of a multi-function navigation device incorporated into a handheld electronic device cradled in a user's hand in accordance with an exemplary embodiment; and

FIG. 6 is a block diagram representing a wireless handheld electronic device interacting in a communication network in accordance with an exemplary embodiment.

### DETAILED DESCRIPTION

Detailed embodiments of the present technology will now be described. The examples presented herein are not intended to be limitations of the technology but rather serve as exemplary embodiments to explain the present technology. Those skilled in the art will appreciate that modifications and variations in the present technology can be made without departing from the scope of the claims. Thus, it is intended that the present technology will encompass such modifications and variations that are within the scope of the present technology.

The present technology described herein includes constituents, arrangements, and functions of a multi-function navigation device that can be rotationally actuable and which can be biased in predetermined directions resulting in directional clicking and associated functions. The multi-function navigation device can be part of a device housing in which the multi-function navigation device can be biased from a home position when directionally depressed. Such device housings can include those of a stand-alone pointing device, handheld electronic device, or other similar electronic devices. In an illustrative embodiment, the directional depression of the multi-function navigation device activates switches corresponding to predetermined directions to effectuate directional selections and corresponding movements of a cursor on a display screen.

As used herein, the term stand-alone pointing device describes a pointing device that can operate as an individual device not physically incorporated into another device. It is a term that includes pointing devices such as a conventional mouse, other mouse-like pointing devices such as pointing devices incorporating a trackball, and video gaming pointing devices. The stand-alone pointing device can cooperate with an electronic device, such as a handheld electronic device, a computer, a gaming console, a laptop, and the like. Furthermore, the term handheld electronic device describes a relatively small device that can be held in a user's hand. It is a broader term that includes devices that can be further classified as handheld communication devices that interact with communication networks.

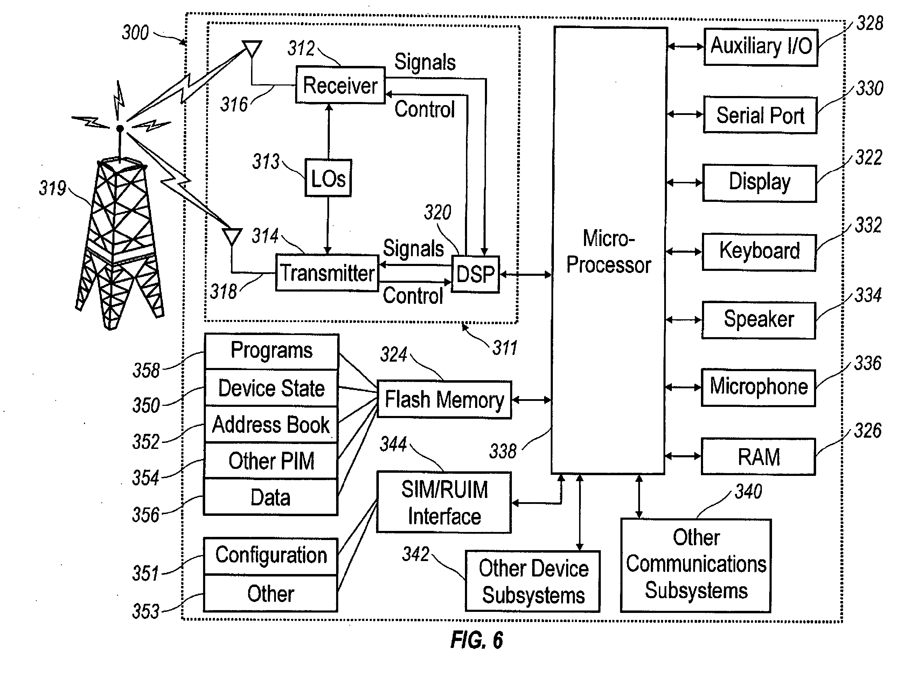

When cooperating in a communications network 319 as depicted in FIG. 6, a handheld electronic device 300 wirelessly transmits data to, and receives data from the communication network 319 utilizing radio frequency signals, the details of which are discussed more fully herein below. Typically, the data transmitted between the handheld electronic device 300 and the communication network 319 can support voice and textual messaging.

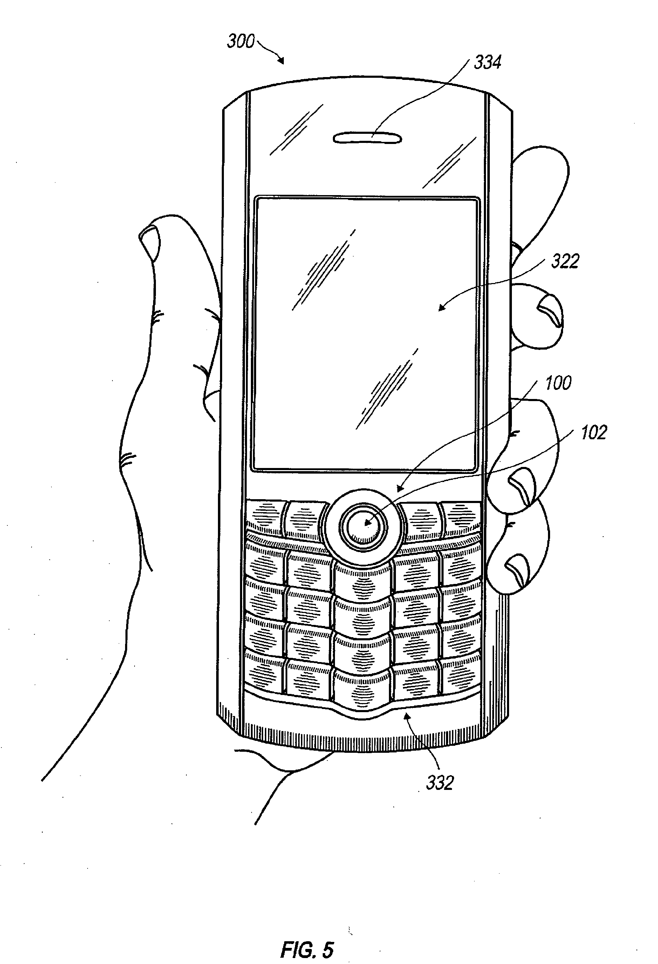

It is to be appreciated from FIG. 5 that the handheld electronic device 300 can comprise a lighted display 322 located proximate to a keyboard 332 suitable for accommodating textual input to the handheld electronic device 300 when in an operable configuration. As shown, the device 300 can be of unibody construction, but in one or more embodiments the device can also be of an alternative construction such as that commonly known as "clamshell" or "flip-phone" style. Regardless, in the operable configuration for the device 300, a multi-function navigation device 100 (auxiliary input 328) can be located essentially between the display 322 and the keyboard 332 or can be placed in other locations in accordance with other exemplary embodiments.

In one or more embodiments, the keyboard 332 comprises a plurality of keys with which alphabetic letters can be associated on a one letter per key basis. In one or more embodiments the keys may be directly marked with letters, or the letters may be presented adjacent, but clearly in association with a particular key. In order to facilitate user input, the alphabetic letters can be configured in a familiar QWERTY, QWERTZ, AZERTY, or Dvorak layout.

In an alternative configuration, the keyboard 332 comprises a plurality of keys with which alphabetic letters can also be associated, but at least a portion of the individual keys have multiple letters associated therewith. This type of configuration is referred to as a reduced keyboard (in comparison to the full keyboard described immediately above) and can, among others, come in QWERTY, QWERTZ, AZERTY, and Dvorak layouts.

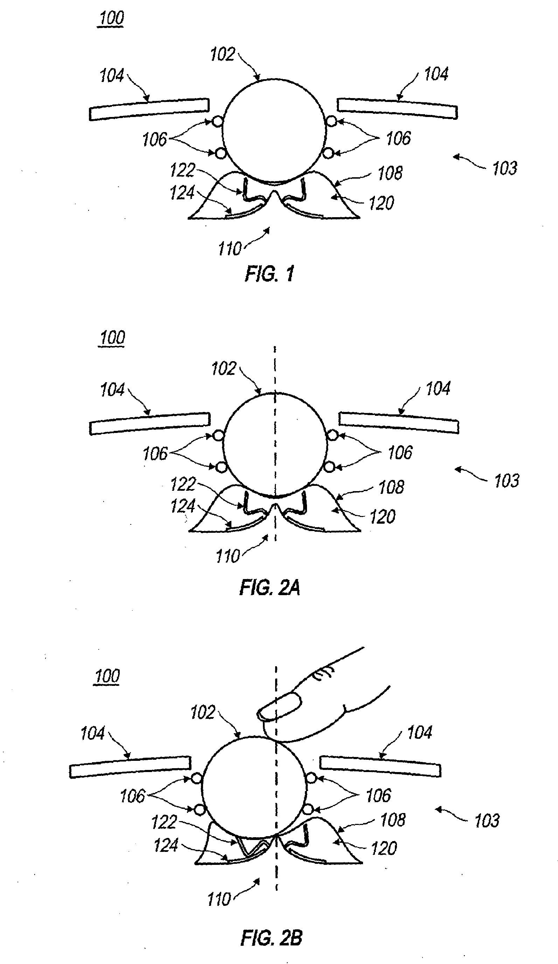

As depicted in FIG. 1, the multi-function navigation device 100 is provided within a device housing 104, and can include a substantially spherical member 102, e.g., a trackball. The substantially spherical member 102 can be used to instruct two-dimensional screen cursor movement in substantially any direction, as well as act as an actuator when the substantially spherical member is depressible, e.g., when the trackball is depressed. Depression of the substantially spherical member 102 moves the substantially spherical member 102 downward into the device housing 104 and at least partly in one of at least two predetermined directions that are orthogonal to the downward direction. The substantially spherical member 102 of the multi-function navigation device 100 can be rotatable and can be exposed for user manipulation at an exterior surface of the device housing 104. Motion of the substantially spherical member 102 can be assessed using a plurality of sensors (not shown) that can be positioned about the multi-function navigation device 100 and determine increments of rotation of the substantially spherical member about a particular axis of rotation. In one or more embodiments, the sensors quantify rotational motion of the substantially spherical member 102 about an x-axis and an intersecting y-axis of the substantially spherical member. The sensors can detect motion of the substantially spherical member 102 and output a cursor control signal based upon the sensed motion of the substantially spherical member. It is to be understood that various configurations for sensing rotational movement of the substantially spherical member 102 can be employed within the multi-function navigation device 100. In one or more embodiments of the multi-function navigation device 100, a sensor configuration (not shown) can include two sensors oriented circumferentially about the substantially spherical member 102 with approximately ninety degree spacing therebetween. Each of the sensors can take the form of a Hall Effect sensor located proximate to the substantially spherical member 102. Additionally, other types of sensors can be used which can include optical, capacitive, and mechanical sensors.

Returning still to FIG. 1, the multi-function navigation device 100 can include a plurality of restraints 106, a control surface 108, a plurality of switches 120, a directional positioning mechanism 110, and a socket 103 within which the substantially spherical member 102, such as a trackball, can be mounted. The plurality of restraints 106 can be in contact with the substantially spherical member 102 and can restrain the substantially spherical member 102 within the socket 103. The control surface 108 can be positioned at least partially beneath the substantially spherical member 102 and above the directional positioning mechanism 110 and the plurality of switches 120. The directional positioning mechanism 110 can be arranged such that the substantially spherical member 102 can be in physical contact with the directional positioning mechanism 110 when the substantially spherical member 102 is in the depressed position or configuration.

As shown in FIG. 2B, when in a depressed configuration, the substantially spherical member 102 can contact the control surface 108 while the directional positioning mechanism 110 urges the substantially spherical member away from a home position in one of at least two predetermined directions. That is, as shown in FIG. 2B, the directional positioning mechanism 110 generally prevents the depression of the substantially spherical member 102 from being strictly downward, but constrains the substantially spherical member to move at least partly in one of at least two predetermined directions that are orthogonal to the downward direction. The plurality of restraints 106 can accommodate movement of the substantially spherical member 102 in a direction corresponding to one of the at least two predetermined directions. At least two of the predetermined directions can be opposite one another. At least one of the plurality of switches 120 can correspond with one of the at least two predetermined directions and upon actuation at least one switch can provide a notification to a processor of the electronic device. In one or more embodiments the processor can be a microprocessor 338 (FIG. 6). Additionally, such correspondence between directional urging and switches 120 is not limited to two predetermined directions but can also include other predetermined directions in accordance with other embodiments.

In one or more embodiments of the multi-function navigation device 100, the plurality of restraints 106 can be in the form of rollers, rings, ball bearings, or gaskets. It is to be understood that the restraints 106 can encompass other forms such as springs or other tension bearing objects. The plurality of restraints 106 may be physically coupled to the housing 104 in any fashion, such that the restraints can urge the substantially spherical member 102 into a home position when no depressing force is applied to the substantially spherical member. The plurality of restraints 106 can allow the substantially spherical member 102 to be directionally biased while restraining the spherical member within the socket 103 of the multi-function navigation device 100. In some embodiments, the restraints may also assist in preventing environmental contaminants, such as dirt, from entering the socket 103.

At least one of the plurality of restraints 106 can bias the substantially spherical member to a home position (FIG. 2A), which can be the default positioning of the substantially spherical member 102 when the spherical member is not being directionally biased. Once directional biasing of the substantially spherical member 102 away from the home position has ended, at least one or more restraints 106 will then subsequently bias the substantially spherical member back into the home position. In one or more embodiments, biasing by the plurality of restraints 106 can be delayed to allow the substantially spherical member 102 to remain directionally biased, with subsequent biasing to the home position by the restraints occurring later. The home position relates to the positioning of the substantially spherical member 102 in relation to the constituents of the multi-function navigation device 100 which is further described below.

The restraints 106 can be continuously in contact with the substantially spherical member 102 and their arrangement about the substantially spherical member can vary in accordance with various embodiments. In one or more embodiments, a plurality of restraints 106 can be positioned circumferentially about the substantially spherical member 102. In alternative embodiments, the positioning of the restraints 106 can also involve rectangular, oval, triangular, or other oblong shaped arrangements about the substantially spherical member 102.

In another embodiment, the plurality of restraints 106 can be located at a predetermined distance from the center of the substantially spherical member 102. Each restraint in the plurality of restraints 106 can be longitudinally positioned away from the center of the spherical member 102 by a distance that can be predetermined. For each restraint, this distance away from the center can be the same or can vary according to the design of the multi-function navigation device 100 and its constituents.

As shown in FIG. 1, the plurality of restraints 106 can include two groups of restraints, with a first group of restraints being located in a first direction and a first predetermined distance away from a center of the substantially spherical member 102. A second group of restraints can be located in a second direction and a second predetermined distance away from the center of the substantially spherical member 102, where the second direction can be opposite from the first direction. The directions of the restraints can be longitudinal with respect to the spherical member 102 such that the first group of restraints can be located in a direction that is longitudinally above the center of the substantially spherical member 102, and the second group of restraints can be located in a direction that is longitudinally below the center of the substantially spherical member 102. In accordance with various embodiments, the longitudinal directions and distances of the restraints can be the same or can vary in relation to the center of the spherical member 102. Additionally, the plurality of restraints 106 can also include multiple groups of restraints numbering more than two groups.

As described above, the control surface 108 can be partially beneath the substantially spherical member 102, as shown in FIGs. 1 and 2A-2B. Accordingly, during depression of the spherical member 102, the control surface 108 can be in contact with the substantially spherical member, such that its surface conforms to and accommodates the contacting surface of the substantially spherical member. In one or more embodiments, the control surface 108 can have a shaped upper surface for accommodating the substantially spherical member 102 over each of the plurality of switches 120. As shown in FIGs. 1 and 2A, when the substantially spherical member 102 is not depressed or is not directionally biased (for example in the home position), the control surface 108 can be substantially or partially in contact with the substantially spherical member 102. In one or more embodiments, the control surface 108 is not in contact with the substantially spherical member 102 when the substantially spherical member 102 is in the home position (not shown).

The control surface 108 can deform to allow for the various directional movements of the substantially spherical member 102, particularly during directional depression of the substantially spherical member. In one or more embodiments, the control surface 108 can restrict vertical depression of the substantially spherical member 102. Such restriction can occur by the control surface 108 not conforming to or accommodating the substantially spherical member 102 during direct vertical depression, or in conjunction with the directional positioning mechanism 110 to prevent direct vertical depression of the substantially spherical member. In other embodiments, the control surface 108 provides little or no restriction in the movement of the substantially spherical member 102. The control surface 108 can be of a flexible material such as rubber, polyurethane, silicone, or other suitable materials.

Referring to FIGs. 2A-B, directional clicking of the substantially spherical member 102, such as a trackball, can occur, for example, when the substantially spherical member is directionally biased away from the home position. As shown in FIG. 2A, the home position is depicted by the dashed line and is a position where the substantially spherical member 102 is substantially centered vertically, horizontally and diagonally in relation to the device housing 104, the directional positioning mechanism 110, and the control surface 108. As shown in FIG. 2B, upon directional depression and biasing of the substantially spherical member 102, the substantially spherical member can be biased away from the home position in one of at least two predetermined directions and to a degree commensurate with the directional depressible force applied to the spherical member.

Upon movement of the substantially spherical member 102 in a predetermined direction, the control surface 108 can conform to accommodate the directional biasing of the substantially spherical member, and at least one of the plurality switches 120 corresponding with the predetermined directions, can be actuated. Upon actuation of the switch 120, a notification is provided to the processor 338 (FIG. 6) of the electronic device 300. In some embodiments, actuation of the switch 120 produces auditory feedback or tactile feedback or both. For example, an audible or tactile click may signal a user that the switch 120 has been activated. The plurality of switches 120 can be mounted within the control surface 108.

As shown in FIGs. 1-2B, the control surface 108 can form part of a multi-switch dome switch that encompasses the plurality of switches 120 and their constituent contacts 122, 124. This allows for a singular and a continuous control surface 108 to accommodate the various directional depressions of the substantially spherical member 102. The control surface 108 can include the directional positioning mechanism 110, such that the control surface, the plurality of switches 120 with contacts 122, 124, and the directional positioning mechanism can be integrated into a multi-switch dome switch. In addition to other functions, the multi-switch dome switch can provide further protection of the switches 120 and the contacts 122, 124 from environmental contaminants.

In other embodiments, the control surface 108 can form part of several dome switches each containing contacts 122, 124 where each dome switch may be diagonally juxtaposed against a side of the directional positioning mechanism 110 (not shown). The switch 120 can include an upper contact 122 and a lower contact 124. The upper contact 122 can be movable and the lower contact 124 can be stationary. It is possible that both contacts 122, 124 can be movable. Other switch implementations can be implemented and can include magnetically sensitive switches or switches that use optical sensors or piezoelectric sensors.

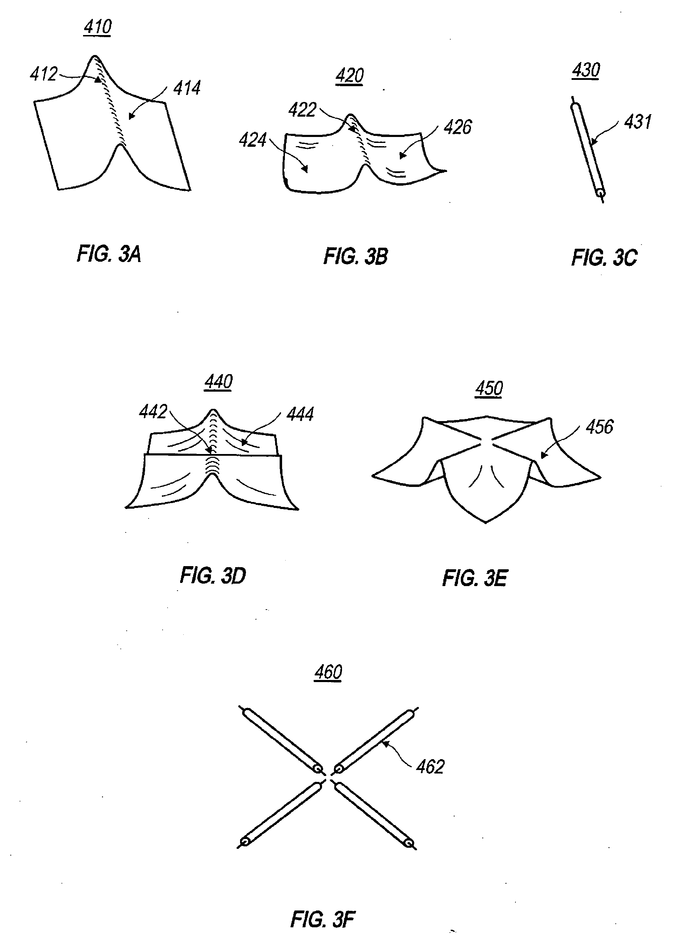

Directional depression of substantially spherical member 102 involves depression of the spherical member in one of the allowable predetermined directions (e.g. those orthogonal to direct vertical depression). FIGs. 1-2B illustrate the use of an exemplary directional positioning mechanism 110 that can be two-directional. While in a depressed configuration, the substantially spherical member 102 can be urged into one of at least two directions made available by the directional positioning mechanism 110. The directional positioning mechanism 110 can be used in various orientations. In one orientation of the directional positioning mechanism 110 that is two-directional, the substantially spherical member 102 can move forward or backward from the home position (FIG. 2A) of the substantially spherical member. In another orientation, the substantially spherical member 102 can move side to side (left or right) from the home position (FIG. 2A) of the substantially spherical member. Use of the directional positioning mechanism 110 that is four-directional (e.g. FIGs. 3D-F) as part of the multi-function navigation device 100 can make available both sets of directional movements (forward/backward and side to side) from the home position of the substantially spherical member 102. In one or more embodiments, other variations in direction can be made available through variations of a directional positioning mechanism.

FIGs. 3A-C illustrate exemplary two-direction directional positioning mechanisms. In FIG. 3A, the two-direction directional positioning mechanism 410 can be in the form of a dual-ramp structure where the "ramps" 414 urge a substantially spherical member 102 while the structure's apex 412 prevents direct vertical depression of the spherical member. In FIG. 3B, the two-direction directional positioning mechanism 420 can have a dual-ramp structure with an apex 422 where the ramps 424 are more curved to form "wells" 426 into which the substantially spherical member 102 can be depressed and further constrained. In FIG. 3C, the two-direction directional positioning mechanism 430 can be a single roller 431 to provide directional urging and moving of the substantially spherical member 102 in two directions.

The directional positioning mechanism 110 can take the form of a two-direction directional positioning mechanism 410, 420, 430 as shown in FIGs. 3A-C, a four-direction directional positioning mechanism 440, 450, 460 as shown in FIGs. 3D-F, in which the directional positioning mechanism is configured to urge the substantially spherical member 102 in one of at least four predetermined directions, or other various multi-direction mechanisms. Generally, the directional positioning mechanism can be a solid structure constructed of a durable material such as plastic or metal. However, other durable materials can be used for the directional positioning mechanism.

FIGs. 3D-F illustrate exemplary four-direction directional positioning mechanisms. In FIG. 3D, the four-direction directional positioning mechanism 440 can be a quad-ramp structure where the "ramps" 444 urge the substantially spherical member 102 while the structure's apexes 442 prevent direct vertical depression of the substantially spherical member 102. FIG. 3E, which provides a different perspective view 450 of the mechanism shown in FIG. 3D, illustrates the ramped cavities 456 that facilitate urging and moving of the substantially spherical member 102 in four directions such as forward, backward, left and right or any other four-direction combination. In FIG. 3F, the four-direction directional positioning mechanism 460 is an association of four rollers 462 providing directional urging and moving of the substantially spherical member 102 in any four directions. The rollers 431, 462 depicted in FIGs. 3C and 3F, may comprise substantially cylindrical members that rotate around fixed axes, or the rollers 431, 462 may be fixed and unable to rotate.

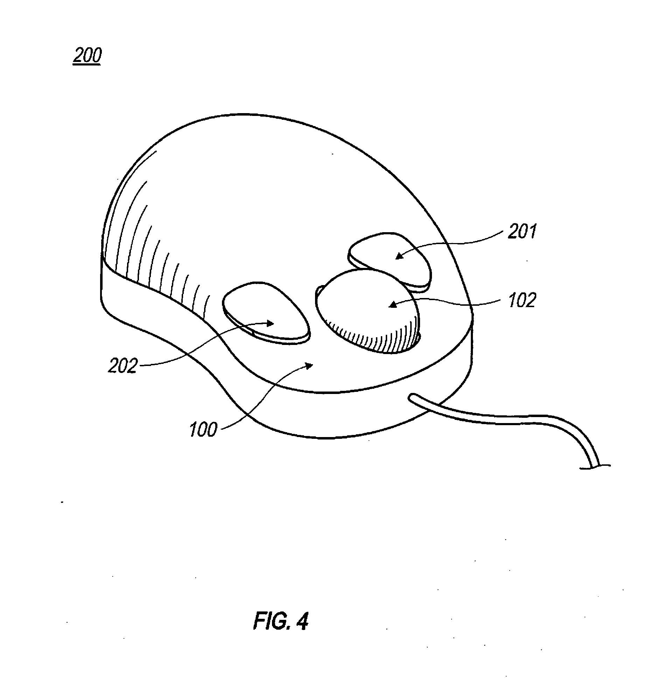

The multi-function navigation device 100 as described herein has general applicability within a variety of known pointing devices such as those that can be stand-alone devices, such as a standard trackball-based pointing device 200 as shown in FIG. 4, or those pointing devices incorporated within a handheld electronic device 300, as shown in FIG. 5. As depicted in FIG. 4, pointing device 200 includes associated buttons 201 and 202, which the user may depress to input one or more commands. In conventional usage and parlance, buttons 201 and 202 may correspond to a left mouse button and a right mouse button on a conventional mouse. In some embodiments, buttons 201 and 202 may be eliminated, as directional depression of the substantially spherical member 102 can be used to input the same commands. In either embodiment, the devices can include the plurality of restraints 106 (not shown) in contact with the substantially spherical member 102, which can restrain the substantially spherical member within the socket 103, the control surface 108 (not shown) positioned at least partially beneath the substantially spherical member and above the directional positioning mechanism 110 and the plurality of switches 120, the plurality of switches 120, and the directional positioning mechanism 110 arranged such that the substantially spherical member 102 can be in communication with the directional positioning mechanism in the depressed configuration, as shown in FIGs. 1, 2A, and 2B.

Both the display screen and the multi-function navigation device 100 can be communicatively coupled to the processor 338 of the handheld electronic device 300. Accordingly, when in a depressed configuration, the substantially spherical member 102 contacts the control surface 108 while the directional positioning mechanism 110 urges the substantially spherical member in one of at least two predetermined directions. At least one of the plurality of switches 120 corresponds with one of the at least two predetermined directions and upon actuation at least one switch provides a notification to the processor 338 of the handheld electronic device 300. In an alternative embodiment, at least two of the plurality of switches 120 can correspond with one of the at least two predetermined directions and upon actuation, at least two switches each can provide notification to the processor 338 of the handheld electronic device 300.

Upon receipt of this notification, the processor 338 of the handheld electronic device 300 can perform a predetermined function in accordance with the notification. It is to be understood that the processor 338 of the handheld electronic device 300 can perform various predetermined functions in response to notifications from the switches 120. Such exemplary predetermined functions can include the movement, direction and control of a cursor displayed on a device display screen 322. The predetermined function can be a select function that can select a graphical item displayed on the display screen 322 of the handheld electronic device 300. Such graphical items can include and are not limited to text, icons, windows, menus, sub-menus, menu items or any other item displayed on the display screen 322.

The handheld electronic device 300 having incorporated the multi-function navigation device 100, can utilize various directional positioning mechanisms to urge the substantially spherical member 102 into a particular predetermined direction. For example, a two-direction directional positioning mechanism (e.g. FIGs. 3A-C) can be used to urge the substantially spherical member 102 in one of at least two predetermined directions. In such a case, the plurality of switches can be at least two and can be configured on either side of the directional positioning mechanism 110 in accordance with various embodiments. Similarly, other embodiments can employ the use of a four-direction directional positioning mechanism (e.g. FIGs. 3D-F) configured for urging the substantially spherical member 102 in one of at least four predetermined directions. In such a case, at least four switches 120 can be used in which their configuration about a directional positioning mechanism can vary. In yet another embodiment, the plurality of switches 120 can include four switches positioned at approximately ninety degrees from each other. Such embodiments may support elimination of other directional keys, such as arrow keys, thereby saving or more effectively utilizing space on handheld electronic device 300.

Within any configuration of the plurality of switches 120, there exists at least a one to one correspondence between a given switch and a direction made available to the substantially spherical member 102. It is to be understood that the exemplary plurality of switches described herein can take the form of individual dome switches or can be combined with the control surface 108 to form part of a single multi-switch dome switch. As described above, in one or more embodiments, the directional positioning mechanism is configured to urge the substantially spherical member 102 in one of at least four predetermined directions.

Known pointing devices often suffer from various limitations relating to precision, software compatibility, and needed space on a device. In addressing these limitations, the multi-function navigation device 100 provides a substantially spherical member 102 that can rotate and be directionally depressed and clicked to allow biasing of the substantially spherical member in predetermined directions. This provides a user the rotational functionalities of a standard trackball with the added ability of directional moving and clicking of the trackball in varied directions with corresponding functions. In doing so the multi-function navigation device 100 provides a greater scope of functionality than that offered by conventional trackball pointing devices and overcomes the spacial and functional limitations present in stand-alone pointing devices and those pointing devices incorporated into handheld electronic devices. Such enhanced functionalities can be particularly useful when trying to perform navigation and selection functions relating to a cursor on a display of an electronic device.

In considering a multi-function navigation device 100 as incorporated within the aforementioned handheld electronic device 300, the motion of the substantially spherical member 102 effectuates movement of a cursor about the display screen 322 of the handheld electronic device 300. While "cursor" movement is referred to herein, it shall be appreciated that any resultant motion that is directed by the substantially spherical member 102 can be implemented. Other such motions include but are not limited to scrolling down through a view on a webpage and scrolling through menu options. It should be appreciated that all such types of navigational motion on the display screen 322 are exemplarily described herein in terms of a cursor (such as a pointing arrow) movement across a display screen 322; however, those persons skilled in the art will also appreciate that "cursor" movement or navigation on a screen can also be descriptive of successively highlighting presented menu items, screen icons or other items displayed on a display screen 322.

In one or more aspects of the multi-function navigation device 100, rotational movement of the substantially spherical member 102 effectuates movement of a cursor about the display 322 of the handheld electronic device 300. Additionally, cursor movement is also effectuated by the directional depression of the substantially spherical member 102. As previously described, when in a depressed configuration, the directional positioning mechanism 110 urges the substantially spherical member 102 in a predetermined direction and at least one corresponding switch 120 can be actuated to provide a notification to the processor 338 of the handheld electronic device 300. Upon receipt and in response to this notification, the processor 338 performs at least one predetermined function in accordance with the notification. One such function can involve the discrete movement of a cursor in a predetermined increment. A cursor can be repositioned to a predetermined increment on the display in response to execution of the predetermined function. For example, rotational movement of the substantially spherical member 102 allows for general unspecified movements of a cursor about the display 322. For more precise movements of the cursor in a particular direction, directional depression of the substantially spherical member 102 effectuates notification of the processor 338 and subsequent issuance of at least one predetermined function to allow for the incremental movement of the cursor about the display. It is to be understood that such predetermined increments of cursor movement can vary and can have a corresponding predetermined direction which is further described below.

As shown in FIG. 2B, a particular directional depression away from the home position of the substantially spherical member 102, can have an associated directional switch corresponding to the direction of depression. By directionally depressing and clicking the substantially spherical member 102, one can move a cursor in precise specified increments and in a direction corresponding to the directional depression of the substantially spherical member 102 away from the home position. A cursor can be repositioned according to the predetermined increment in a direction that corresponds to the location of the actuated switch in relation to a center of the spherical member in the home position. It is to be understood that directional depression and clicking of the substantially spherical member 102 is not limited to functions involving directionally incremental cursor movements but can also involve any manner of selection or directional functions available within the handheld electronic device 300. Further, in some implementations, directionality of the depression of the substantially spherical member 102 is not relevant. In other words, in some applications, what matters is whether the substantially spherical member 102 is depressed or not, and the direction of the depression is not important. In such a case, depression of the substantially spherical member 102 in any direction, and the subsequent activation of any switch 120, could be recognized as indicating that the substantially spherical member had been depressed.

Further aspects of the environments, and devices described hereinabove are expanded upon in the following details. In the exemplary embodiment of FIG. 5, the handheld electronic device 300 can be cradleable in the palm of a user's hand. The size of the device 300 can be such that a user can operate the device 300 using the same hand that is holding the device 300. In one or more embodiments, the user can actuate all features of the device 300 using the thumb of the cradling hand. While in other embodiments, features can require the use of more than just the thumb of the cradling hand. The depicted embodiment of the handheld device 300 features the keyboard 332 on the face of the device 300, which can be actuable by the thumb of the hand cradling the device. The user can also hold the device 300 in such a manner to enable two-thumb typing on the device. Furthermore, the user can use fingers rather than thumbs to actuate the keys on the device 300. In order to accommodate palm-cradling of the device 300 by the average person, it is longer (height as shown in FIG. 5) than it is wide, and the width can be between approximately fifty and seventy-six millimeters (two and three inches), but by no means limited to such dimensions.

The handheld electronic device 300 can include an input portion and an output display portion. The output display portion can be the display screen 322, such as an LCD or other display device capable of displaying device output.

Referring now to FIGs. 5 and 6, an exemplary handheld electronic device is shown in FIG. 5 and its cooperation in a wireless network is exemplified in the block diagram of FIG. 6. These figures are exemplary only, and those persons skilled in the art will appreciate the additional elements and modifications necessary to make the device work in particular network environments.

The block diagram of FIG. 6 representing the handheld electronic device 300 interacting in the communication network 319 shows the device's 300 inclusion of the microprocessor 338 which controls the operation of the device 300. In one or more embodiments the microprocessor 338 can be a processor. The communication subsystem 311 performs all communication transmission and reception with the wireless network 319. The microprocessor 338 further connects with an auxiliary input/output (I/O) subsystem 328, a serial port (typically a Universal Serial Bus port) 330, the display 322, the keyboard 332, a speaker 334, a microphone 336, random access memory (RAM) 326, and flash memory 324. Other communications subsystems 340 and other device subsystems 342 can be generally indicated as connected to the microprocessor 338 as well. An example of a communication subsystem 340 can be that of a short range communication subsystem such as BLUETOOTH® communication module or an infrared device and associated circuits and components. Additionally, the microprocessor 338 can perform operating system functions and can enable execution of software applications on the handheld electronic device 300.

The above described auxiliary I/O subsystem 328 can take a variety of different subsystems including the above described multi-function navigation device 100. As previously mentioned, the multi-function navigation device 100 can be a trackball based device. Other auxiliary I/O devices can include external display devices and externally connected keyboards (not shown). While the above examples have been provided in relation to the auxiliary I/O subsystem, other subsystems capable of providing input or receiving output from the handheld electronic device 300 can be considered within the scope of this disclosure.

In an illustrative embodiment, the handheld electronic device 300 can be designed to wirelessly connect with the communication network 319. Some communication networks that the handheld electronic device 300 may be designed to operate on require a subscriber identity module (SIM) or removable user identity module (RUIM). Thus, the device 300 intended to operate on such a system will include SIM/RUIM interface 344 into which the SIM/RUIM card (not shown) can be placed. The SIM/RUIM interface 344 can be one in which the SIM/RUIM card is inserted and ejected.

In an exemplary embodiment, the flash memory 324 can be enabled to provide a storage location for the operating system, device programs, and data. While the operating system in one or more embodiments can be stored in flash memory 324, the operating system in other embodiments can be stored in read-only memory (ROM) or similar storage element (not shown). As those skilled in the art will appreciate, the operating system, device application or parts thereof can be loaded in RAM 326 or other volatile memory.

In one or more embodiments, the flash memory 324 contains programs/applications 358 for execution on the device 300 including an address book 352, a personal information manager (PIM) 354, and the device state 350. Furthermore, programs 358 and data 356 can be segregated upon storage in the flash memory 324 of the device 300. However, another embodiment of the flash memory 324 utilizes a storage allocation method such that a program 358 can be allocated additional space in order to store data associated with such program. Other known allocation methods exist in the art and those persons skilled in the art will appreciate additional ways to allocate the memory of the device 300.

In an illustrative embodiment, the device 300 can be pre-loaded with a limited set of programs that enable it to operate on the communication network 319. Another program that can be preloaded is the PIM 354 application that has the ability to organize and manage data items including but not limited to email, calendar events, voice messages, appointments and task items. In order to operate efficiently, memory 324 can be allocated for use by the PIM 354 for the storage of associated data. In one or more embodiments, the information that PIM 354 manages can be seamlessly integrated, synchronized and updated through the communication network 319 with a user's corresponding information on a remote computer (not shown). The synchronization, in another embodiment, can also be performed through the serial port 330 or other short range communication subsystem 340. Other applications can be installed through connection with the wireless network 319, serial port 330 or via other short range communication subsystems 340.

When the device 300 is enabled for two-way communication within the wireless communication network 319, it can send and receive signals from a mobile communication service. Examples of communication systems enabled for two-way communication include, but are not limited to, the GPRS (General Packet Radio Service) network, the UMTS (Universal Mobile Telecommunication Service) network, the EDGE (Enhanced Data for Global Evolution) network, and the CDMA (Code Division Multiple Access) network and those networks generally described as packet-switched, narrowband, data-only technologies mainly used for short burst wireless data transfer.

For the systems listed above, the handheld electronic device 300 must be properly enabled to transmit and receive signals from the communication network 319. Other systems may not require such identifying information. A GPRS, UMTS, and EDGE require the use of a SIM (Subscriber Identity Module) in order to allow communication with the communication network 319. Likewise, most CDMA systems require the use of a RUIM (Removable Identity Module) in order to communicate with the CDMA network. The RUIM and SIM card can be used in multiple different devices 300. The handheld electronic device 300 can operate some features without a SIM/RUIM card, but it will not be able to communicate with the network 319. In some locations, the device 300 can be enabled to work with special services, such as "911" emergency, without a SIM/RUIM or with a non-functioning SIM/RUIM card. A SIM/RUIM interface 344 located within the device allows for removal or insertion of a SIM/RUIM card (not shown). This interface 344 can be configured like that of a disk drive or a PCMCIA slot or other known attachment mechanism in the art. The SIM/RUIM card features memory and holds key configurations 351, and other information 353 such as identification and subscriber related information. Furthermore, a SIM/RUIM card can be enabled to store information about the user including identification, carrier and address book information. With a properly enabled handheld electronic device 300, two-way communication between the device 300 and communication network 319 can be implemented.

If the handheld electronic device 300 is enabled as described above or the communication network 319 does not require such enablement, the two-way communication enabled device 300 can both transmit and receive information from the communication network 319. The transfer of communication can be from the device 300 or to the device 300. In order to communicate with the communication network 319, the device 300 in an illustrative embodiment can be equipped with an integral or internal antenna 318 for transmitting signals to the communication network 319. Likewise the handheld electronic device 300 in the illustrative embodiment can be equipped with another antenna 316 for receiving communication from the communication network 319. These antennae (316, 318) in another embodiment can be combined into a single antenna (not shown). As one skilled in the art would appreciate, the antenna or antennae (316, 318) in another embodiment can be externally mounted on the device 300.

When equipped for two-way communication, the handheld electronic device 300 features the communication subsystem 311. As is well known in the art, this communication subsystem 311 can be modified so that it can support the operational needs of the device 300. The subsystem 311 includes a transmitter 314 and receiver 312 including the associated antenna or antennae (316, 318) as described above, local oscillators (LOs) 313, and a processing module 320 which in one or more embodiments can be a digital signal processor (DSP) 320.

A signal received by the handheld electronic device 300 can be first received by the antenna 316 and then input into the receiver 312, which in one or more embodiments can perform common receiver functions including signal amplification, frequency down conversion, filtering, channel selection and the like, and analog to digital (A/D) conversion. The A/D conversion allows the DSP 320 to perform more complex communication functions such as demodulation and decoding on the signals that can be received by the DSP 320 from the receiver 312. The DSP 320 can issue control commands to the receiver 312. An example of a control command that the DSP 320 can send to the receiver 312 is gain control, which can be implemented in automatic gain control algorithms implemented in the DSP. Likewise, the handheld electronic device 300 can transmit signals to the communication network 319. The DSP 320 communicates the signals to be sent to the transmitter 314 and further communicates control functions, such as the above described gain control. The signal can be emitted by the device 300 through an antenna 318 connected to the transmitter 314.

It is to be understood that communication by the handheld electronic device 300 with the wireless network 319 can be any type of communication that both the wireless network 319 and device 300 can be enabled to transmit, receive and process. In general, these can be classified as voice and data. Voice communication can be communication in which signals for audible sounds can be transmitted by the device 300 through the communication network 319. Data can be all other types of communication that the device 300 can perform within the constraints of the wireless network 319.

In the instance of voice communications, voice transmissions that originate from the handheld electronic device 300 enter the device though the microphone 336, which communicates the signals to the microprocessor 338 for further conditioning and processing. The microprocessor 338 sends the signals to the DSP 320 which controls the transmitter 314 and provides the correct signals to the transmitter. Then, the transmitter 314 sends the signals to the antenna 318, which emits the signals to be detected by a communication network 319. Likewise, when the receiver 312 obtains a signal from the receiving antenna 316 that is a voice signal, it can be transmitted to the DSP 320 which further sends the signal to the microprocessor 338. Then, the microprocessor 338 provides a signal to the speaker 334 of the device 300 and the user can hear the voice communication that has been received. The device 300 in one or more embodiments can be enabled to allow for full duplex voice transmission.

In another embodiment, the voice transmission can be received by the handheld electronic device 300 and translated as text to be shown on the display screen 322 of the device 300. The handheld electronic device 300 can retrieve messages from a voice messaging service operated by the communication network operator. In an illustrative embodiment, the device 300 displays information in relation to the voice message, such as the number of voice messages or an indication that a new voice message is present on the operating system.

In another embodiment, the display 322 of the handheld electronic device 300 provides an indication about the identity of an incoming call, duration of the voice communication, telephone number of the device 300, call history, and other related information. It should be appreciated that the above described embodiments are given as examples only and one skilled in the art can effect alterations, modifications and variations to the particular embodiments without departing from the scope of the application.

As stated above, the handheld electronic device 300 and communication network 319 can be enabled to transmit, receive and process data. Several different types of data exist and some of these types of data will be described in further detail. One type of data communication that occurs over the communication network 319 includes electronic mail (email) messages. Typically an email is text based, but can also include other types of data such as picture files, attachments and html. While these are given as examples, other types of messages can be considered within the scope of this disclosure as well.

When the email originates from a source outside of the device and is communicated to the handheld electronic device 300, it can be first received by the receiving antenna 316 and then transmitted to the receiver 312. From the receiver 312, the email message can be further processed by the DSP 320, and it then reaches the microprocessor 338. The microprocessor 338 executes instructions as indicated from the relevant programming instructions to display, store or process the email message as directed by the program. In a similar manner, once an email message has been properly processed by the microprocessor 338 for transmission to the communication network 319, it can be first sent to the DSP 320, which further transmits the email message to the transmitter 314. The transmitter 314 processes the email message and transmits it to the transmission antenna 318, which broadcasts a signal to be received by a communication network 319. While the above has been described generally, those skilled in this art will appreciate those modifications which can be necessary to enable the handheld electronic device 300 to properly transmit the email message over a given communication network 319.

Furthermore, the email message can instead be transmitted from the handheld electronic device 300 via the serial port 330, another communication port 340, or other wireless communication ports 340. The user of the device 300 can generate a message to be sent using the keyboard 332 and/or auxiliary I/O 328, and the associated application to generate the email message. Once the email message is generated, the user can execute a send command which directs the email message from the handheld electronic device 300 to the communication network 319. In an exemplary embodiment, the keyboard 332, such as an alphanumeric keyboard, can be used to compose the email message. In one or more embodiments, the auxiliary I/O device 328 can be used in addition to the keyboard 332.

While the above has been described in relation to email messages, one skilled in the art could easily modify the procedure to function with other types of data such as SMS text messages, internet websites, videos, instant messages, programs and ringtones. Once the data is received by the microprocessor 338, the data can be placed appropriately within the operating system of the handheld electronic device 300. This can involve presenting a message on the display 322 which indicates the data has been received or storing it in the appropriate memory 324 on the device 300. For example, a downloaded application such as a game will be placed into a suitable place in the flash memory 324 of the device 300. The operating system of the device 300 can also allow for appropriate access to the new application as downloaded.

Exemplary embodiments have been described hereinabove regarding both wireless handheld electronic devices, as well as the communication networks within which they cooperate. It should be appreciated, however, that a focus of the present disclosure is to provide a multi-function navigation device that is both rotationally actuable and multi-directionally clickable for use within various stand-alone pointing devices as well as within handheld electronic devices.

## Claims

1. A multi-function navigation device (100) for an electronic device (300), comprising:
a depressible navigation trackball (102) mounted within a socket (103); **characterised in that** it further comprises
a directional positioning mechanism (110) arranged such that the navigation trackball (102) is in communication with the directional positioning mechanism (110) in the depressed configuration, wherein said directional positioning mechanism (110) urges the navigation trackball (102) in one of at least two predetermined directions when the navigation trackball (102) is in the depressed configuration; and
a plurality of switches (120), wherein at least one of the plurality of switches (120) corresponds with one of the at least two predetermined directions and said at least one switch (120) provides a notification to a processor of said electronic device (300) upon actuation.

2. The multi-function navigation device (100) as recited in claim 1, further comprising a plurality of restraints (106) in contact with the navigation trackball (102), wherein the restraints (106) restrain the navigation trackball (102) within the socket (103).

3. The multi-function navigation device (100) as recited in claim 2, wherein the plurality of restraints (106) are positioned circumferentially about the navigation trackball (102).

4. The multi-function navigation device (100) as recited in one of claims 2-3, wherein the plurality of restraints (106) are located at a predetermined distance from a center of the navigation trackball (102).

5. The multi-function navigation device (100) as recited in one of claims 2-4, wherein at least one of the plurality of restraints (106) bias the navigation trackball (102) to a home position.

6. The multi-function navigation device (100) as recited in one of claims 2-5, wherein the restraints (106) accommodate movement of the navigation trackball (102) in a direction corresponding to one of the at least two predetermined directions.

7. The multi-function navigation device (100) as recited in one of claims 1-6, further comprising a control surface (108) positioned at least partially beneath the navigation trackball (102) and above said directional positioning mechanism (110) and said plurality of switches (120), wherein the navigation trackball (102) contacts the control surface (108) in a depressed configuration.

8. The multi-function navigation device (100) as recited in claim 7, wherein said plurality of switches (120) are mounted within the control surface (108).

9. The multi-function navigation device (100) as recited in one of claims 7-8, wherein the directional positioning mechanism (110) restricts vertical depression of the navigation trackball (102).

10. The multi-function navigation device (100) as recited in one of claims 7-9, wherein the control surface (108) has a shaped upper surface for accommodating the navigation trackball (102) over each of the plurality of switches (120).

11. The multi-function navigation device (100) as recited in one of claims 1-10, wherein the directional positioning mechanism (110) is configured to urge the navigation trackball (102) in one of at least four predetermined directions.

12. A handheld electronic device (300) comprising:
a display screen (322) coupled to a processor (338) of the handheld electronic device (300);
a multi-function navigation device (100) according to one of claims 1-11 communicatively coupled to the processor (338), wherein said multi-function navigation (100) device comprises
a depressible navigation trackball (102) mounted within a socket (103);
**characterised in that** it further comprises
a directional positioning mechanism (110) arranged such that the navigation trackball (102) is in communication with the directional positioning mechanism (110) in a depressed configuration, wherein said directional positioning mechanism (110) urges the navigation trackball (102) in one of at least two predetermined directions when the navigation trackball (102) is in the depressed configuration; and
a plurality of switches (120), wherein at least one of the plurality of switches (120) corresponds with one of the at least two predetermined directions and said at least one switch (120) provides a notification to the processor (338) of said handheld electronic device (300) upon actuation; and
wherein said processor (338) performs a predetermined function upon receipt of said notification.

13. The handheld electronic device (300) as recited in claim 12, wherein at least two of said plurality of switches (120) corresponds with one of the at least two predetermined directions and said at least two switches (120) each provides a notification to the processor (338) of said handheld electronic device (300) upon actuation.

14. The handheld electronic device (300) as recited in one of claims 12, wherein a cursor is repositioned to a predetermined increment on the display (322) in response to performance of the predetermined function.

15. The handheld electronic device (300) as recited in claim 14, wherein the cursor is repositioned according to the predetermined increment in a direction that corresponds to the location of the actuated switch (120) in relation to a center of the navigation trackball (102) in a home position.

## Patentansprüche

1. Multifunktionsnavigationsvorrichtung (100) für eine elektronische Vorrichtung (300), mit:
einer drückbaren Navigationssteuerkugel (102), die in eine Fassung (103) montiert ist,
**dadurch gekennzeichnet, dass** sie ferner Folgendes aufweist:
einen Richtungspositioniermechanismus (110), der so angeordnet ist, dass in der gedrückten Konfiguration die Navigationssteuerkugel (102) in Kommunikation mit dem Richtungspositioniermechanismus ist (110), wobei der Richtungspositioniermechanismus (110) die Navigationssteuerkugel (102) in eine von mindestens zwei vorbestimmten Richtungen drängt, wenn die Navigationssteuerkugel (102) in der gedrückten Konfiguration ist, und
eine Vielzahl an Schaltern (120), wobei mindestens einer der Vielzahl an Schaltern (120) einer der mindestens zwei vorbestimmten Richtungen entspricht und der mindestens eine Schalter (120) einem Prozessor der elektronischen Vorrichtung (300) bei Betätigung eine Mitteilung liefert.

2. Multifunktionsnavigationsvorrichtung (100) nach Anspruch 1, ferner mit einer Vielzahl an Halteeinrichtungen (106) in Kontakt mit der Navigationssteuerkugel (102), wobei die Halteeinrichtungen (106) die Navigationssteuerkugel (102) in der Fassung (103) halten.

3. Multifunktionsnavigationsvorrichtung (100) nach Anspruch 2, wobei die Vielzahl an Halteeinrichtungen (106) ringsum um die Navigationssteuerkugel (102) positioniert ist.

4. Multifunktionsnavigationsvorrichtung (100) nach Anspruch 2 oder 3, wobei die Vielzahl an Halteeinrichtungen (106) in einer vorbestimmten Entfernung von einem Mittelpunkt der Navigationssteuerkugel (102) plaziert ist.

5. Multifunktionsnavigationsvorrichtung (100) nach einem der Ansprüche 2 bis 4, wobei mindestens eine der Vielzahl an Halteeinrichtungen (106) die Navigationssteuerkugel (102) in eine Grundposition vorspannt.

6. Multifunktionsnavigationsvorrichtung (100) nach einem der Ansprüche 2 bis 5, wobei die Halteeinrichtungen (106) eine Bewegung der Navigationssteuerkugel (102) in eine Richtung erlauben, die einer der mindestens zwei vorbestimmten Richtungen entspricht.

7. Multifunktionsnavigationsvorrichtung (100) nach einem der Ansprüche 1 bis 6, ferner mit einer Steueroberfläche (108), die zumindest teilweise unterhalb der Navigationssteuerkugel (102) und über dem Richtungspositioniermechanismus (110) und der Vielzahl an Schaltern (120) positioniert ist, wobei die Navigationssteuerkugel (102) die Steueroberfläche (108) in einer gedrückten Konfiguration kontaktiert.

8. Multifunktionsnavigationsvorrichtung (100) nach Anspruch 7, wobei die Vielzahl an Schaltern (120) in die Steueroberfläche (108) montiert ist.

9. Multifunktionsnavigationsvorrichtung (100) nach Anspruch 7 oder 8, wobei der Richtungspositioniermechanismus (110) vertikales Drücken der Navigationssteuerkugel (102) einschränkt.

10. Multifunktionsnavigationsvorrichtung (100) nach einem der Ansprüche 7 bis 9, wobei die Steueroberfläche (108) eine geformte obere Oberfläche zum Beherbergen der Navigationssteuerkugel (102) über jeden der Vielzahl an Schaltern (120) aufweist.

11. Multifunktionsnavigationsvorrichtung (100) nach einem der Ansprüche 1 bis 10, wobei der Richtungspositioniermechanismus (110) konfiguriert ist, die Navigationssteuerkugel (102) in eine von mindestens vier vorbestimmten Richtungen zu drängen.

12. Elektronische Handvorrichtung (300) mit:
einem Anzeigebildschirm (322), der mit einem Prozessor (338) der elektronischen Handvorrichtung (300) gekoppelt ist,
einer Multifunktionsnavigationsvorrichtung (100) nach einem der Ansprüche 1 bis 11, die kommunikativ mit dem Prozessor (338) gekoppelt ist, wobei die Multifunktionsnavigationsvorrichtung (100) Folgendes aufweist:
eine drückbare Navigationssteuerkugel (102), die in eine Fassung (103) montiert ist,
**dadurch gekennzeichnet, dass** sie ferner Folgendes aufweist:
einen Richtungspositioniermechanismus (110), der so angeordnet ist, dass in der gedrückten Konfiguration die Navigationssteuerkugel (102) in Kommunikation mit dem Richtungspositioniermechanismus ist (110), wobei der Richtungspositioniermechanismus (110) die Navigationssteuerkugel (102) in eine von mindestens zwei vorbestimmten Richtungen drängt, wenn die Navigationssteuerkugel (102) in der gedrückten Konfiguration ist, und
eine Vielzahl an Schaltern (120), wobei mindestens einer der Vielzahl an Schaltern (120) einer der mindestens zwei vorbestimmten Richtungen entspricht und der mindestens eine Schalter (120) einem Prozessor (338) der elektronischen Handvorrichtung (300) bei Betätigung eine Mitteilung liefert,
wobei der Prozessor (338) eine vorbestimmte Funktion auf Empfang der Mitteilung durchführt.

13. Elektronische Handvorrichtung (300) nach Anspruch 12, wobei mindestens zwei der Vielzahl an Schaltern (120) einer der mindestens zwei vorbestimmten Richtungen entsprechen und die mindestens zwei Schalter (120) jeweils dem Prozessor (338) der elektronischen Handvorrichtung (300) bei Betätigung eine Mitteilung liefern.

14. Elektronische Handvorrichtung (300) nach einem der Ansprüche 12, wobei ein Cursor an ein vorbestimmtes Inkrement auf der Anzeige (322) als Reaktion auf Durchführung der vorbestimmten Funktion neu positioniert ist.

15. Elektronische Handvorrichtung (300) nach Anspruch 14, wobei der Cursor nach dem vorbestimmten Inkrement in eine Richtung neu positioniert ist, die dem Ort des betätigten Schalters (120) in Bezug auf einen Mittelpunkt der Navigationssteuerkugel (102) in einer Grundposition entspricht.

## Revendications

1. Dispositif (100) de navigation multifonctions pour un dispositif électronique (300), comprenant :
une boule de commande (102) de navigation pouvant être enfoncée montée dans un support (103) ;
**caractérisé en ce qu'**il comprend en outre
un mécanisme (110) de positionnement directionnel agencé de sorte que la boule de commande (102) de navigation communique avec le mécanisme (110) de positionnement directionnel dans la configuration enfoncée, où ledit mécanisme (110) de positionnement directionnel sollicite la boule de commande (102) de navigation dans l'une des au moins deux directions prédéterminées lorsque la boule de commande (102) de navigation se trouve dans la configuration enfoncée ; et
une pluralité de commutateurs (120), où au moins l'un de la pluralité de commutateurs (120) correspond à l'une des au moins deux directions prédéterminées et ledit au moins un commutateur (120), lorsqu'il est actionné, procure une notification à un processeur dudit dispositif électronique (300).

2. Dispositif (100) de navigation multifonctions selon la revendication 1, comprenant en outre une pluralité de moyens (106) de retenue en contact avec la boule de commande (102) de navigation, où les moyens de retenue (106) retiennent la boule de commande (102) de navigation dans le support (103).

3. Dispositif (100) de navigation multifonctions selon la revendication 2, dans lequel la pluralité de moyens (106) de retenue sont positionnés de manière circonférentielle autour de la boule de commande (102) de navigation.

4. Dispositif (100) de navigation multifonctions selon l'une des revendications 2-3, dans lequel la pluralité de moyens (106) de retenue sont situés à une distance prédéterminée d'un centre de la boule de commande (102) de navigation.

5. Dispositif (100) de navigation multifonctions selon l'une des revendications 2-4, dans lequel au moins l'un de la pluralité de moyens (106) de retenue maintient la boule de commande (102) de navigation dans une position initiale.

6. Dispositif (100) de navigation multifonctions selon l'une des revendications 2-5, dans lequel les moyens (106) de retenue permettent le mouvement de la boule de commande (102) de navigation dans une direction correspondant à l'une des au moins deux directions prédéterminées.

7. Dispositif (100) de navigation multifonctions selon l'une des revendications 1-6, comprenant en outre une surface (108) de commande positionnée au moins en partie sous la boule de commande (102) de navigation et au-dessus dudit mécanisme (110) de positionnement directionnel et de ladite pluralité de commutateurs (120), où la boule de commande (102) de navigation rentre en contact avec la surface de commande (108) dans une configuration enfoncée.

8. Dispositif (100) de navigation multifonctions selon la revendication 7, dans lequel ladite pluralité de commutateurs (120) sont montés dans la surface (108) de commande.

9. Dispositif (100) de navigation multifonctions selon l'une des revendications 7-8, dans lequel le mécanisme (110) de positionnement directionnel limite un enfoncement vertical de la boule de commande (102) de navigation.

10. Dispositif (100) de navigation multifonctions selon l'une des revendications 7-9, dans lequel la surface (108) de commande a une surface supérieure conformée pour accueillir la boule de commande (102) de navigation sur chacun de la pluralité de commutateurs (120).

11. Dispositif (100) de navigation multifonctions selon l'une des revendications 1-10, dans lequel le mécanisme (110) de positionnement directionnel est configuré pour solliciter la boule de commande (102) de navigation dans l'une des au moins quatre directions prédéterminées.

12. Dispositif électronique de poche (300) comprenant :
un écran d'affichage (322) couplé à un processeur (338) du dispositif électronique de poche (300) ;
un dispositif (100) de navigation multifonctions selon l'une des revendications 1-11 couplé au processeur (338) pour communiquer avec ce dernier, où ledit dispositif (100) de navigation multifonctions comprend
une boule de commande (102) de navigation pouvant être enfoncée montée dans un support (103) ;
**caractérisé en ce qu'**il comprend en outre
un mécanisme (110) de positionnement directionnel agencé de sorte que la boule de commande (102) de navigation soit en communication avec le mécanisme (110) de positionnement directionnel dans une configuration enfoncée, où ledit mécanisme (110) de positionnement directionnel sollicite la boule de commande (102) de navigation dans l'une des au moins deux directions prédéterminées lorsque la boule de commande (102) de navigation est dans la configuration enfoncée ; et
une pluralité de commutateurs (120), où au moins l'un de la pluralité de commutateurs (120) correspond à l'une des au moins deux directions prédéterminées et ledit au moins un commutateur (120), lorsqu'il est actionné, procure une notification au processeur (338) dudit dispositif électronique de poche (300) ; et
où ledit processeur (338) effectue une fonction prédéterminée à réception de ladite notification.

13. Dispositif électronique de poche (300) selon la revendication 12, dans lequel au moins deux de ladite pluralité de commutateurs (120) correspond à l'une des au moins deux directions prédéterminées et lesdits au moins deux commutateurs (120) fournissent chacun une notification au processeur (338) dudit dispositif électronique de poche (300) lors de l'actionnement.

14. Dispositif électronique de poche (300) selon l'une des revendications 12, dans lequel un curseur est repositionné à un incrément prédéterminé sur l'écran (322) en réponse à la réalisation de la fonction prédéterminée.

15. Dispositif électronique de poche (300) selon la revendication 14, dans lequel le curseur est repositionné en fonction de l'incrément prédéterminé dans une direction qui correspond à l'emplacement du commutateur actionné (120) par rapport à un centre de la boule de commande (102) de navigation dans une position initiale.
